# EUROPÄISCHE PATENTSCHRIFT

(11) **EP 1 371 888 B1**
(45) Veröffentlichungstag und Bekanntmachung des Hinweises auf die Patenterteilung: **16.03.2005**
(21) Anmeldenummer: 02012871.6
(22) Anmeldetag: 11.06.2002
(51) Int. Cl.: F16K 31/06, F15B 13/043

(54) **Magnetventil**
Solenoid valve
Electrovanne

(43) Veröffentlichungstag der Anmeldung: 17.12.2003
(73) Patentinhaber: Festo AG & Co, 73734 Esslingen (DE)
(72) Erfinder: Frisch, Herbert, 73035 Göppingen-Bartenbach (DE)
(74) Vertreter: Abel, Martin, Dipl.-Ing.

(56) Entgegenhaltungen:
- EP-A- 1 172 592
- DE-A- 19 718 408
- US-A- 3 722 531

## Beschreibung

Die Erfindung betrifft ein Magnetventil, mit einem Elektromagnet, der eine Spule mit zugeordneter Jocheinrichtung sowie einen Klappanker für die Betätigung mindestens eines Ventilschließkörpers aufweist, und mit einem die Spule tragenden Ventilgehäuse, das eine den Klappanker mit dem Ventilschließkörper enthaltende Ventilkammer aufweist, in die eine in Verlängerung des Klappankers angeordnete, dicht verschlossene Installationsöffnung für den Klappanker führt.

Bei einem aus der EP 1 172 592 A2 bekannten Magnetventil dieser Art sitzt der Klappanker auf zwei die Ventilkammer durchsetzenden Jochstiften einer rahmenartigen Jocheinrichtung. Bei der Montage wird der Klappanker durch eine zunächst offene Installationsöffnung hindurch in die Ventilkammer eingesteckt, wonach die Installationsöffnung durch ein stopfenartiges Verschlußteil dicht verschlossen wird.

Das bekannte Magnetventil besteht aus einer relativ großen Anzahl von Teilen, was eine relativ aufwendige Herstellung erfordert.

Bei einem ebenfalls mit einem Klappanker ausgerüsteten Magnetventil gemäß DE 197 18 408 A1 hat die den Klappanker enthaltende Ventilkammer eine längsseitige Installationsöffnung, die nach dem Einsetzen des Klappankers durch eine aufgesetzte Baugruppe bestehend aus Spule mit Spulenträger, Jocheinrichtung und einem Hüllgehäuse verschlossen wird. Hier sind umfangreiche Maßnahmen gefordert, um die Ventilkammer im Bereich der Installationsöffnung dicht zu verschließen. Da sich die Ventilkammer hier längsseits neben dem Klappanker erstreckt, steht dieser Bereich zudem nicht zur Ausbildung eventuell gewünschter Ventilöffnungen zur Verfügung. Sollen durch den Klappanker mehrere Ventilöffnungen gesteuert werden, können diese folglich nur auf der der Installationsöffnung gegenüberliegenden Längsseite der Ventilkammer vorgesehen werden.

Es ist die Aufgabe der vorliegenden Erfindung, ein Magnetventil der eingangs genannten Art zu schaffen, das eine Reduzierung der Bauteileanzahl gestattet.

Zur Lösung dieser Aufgabe ist vorgesehen, dass die Installationsöffnung unmittelbar von einem Abschnitt der Jocheinrichtung verschlossen ist, wobei sich der Klappanker rückseitig an diesem Verschlußabschnitt verschwenkbar abstützt.

Die Anordnung der Installationsöffnung in Verlängerung des Klappankers ermöglicht somit weiterhin eine Installationsöffnung mit kleinem Querschnitt, durch die der Klappanker bei seiner Installation in Längsrichtung hindurchgeführt wird. Außerdem gewährleistet diese Orientierung der Installationsöffnung, dass, sofern gewünscht, beidseits des Klappankers zu steuernde Ventilöffnungen an der Wandung der Ventilkammer vorgesehen werden können. Besonders vorteilhaft ist aber, dass zum Verschließen der Installationsöffnung kein eigenständiges Verschlußelement erforderlich ist, sondern unmittelbar die Jocheinrichtung für diesen Zweck herangezogen wird, indem sie so ausgebildet und angeordnet wird, dass sie die Installationsöffnung mit einem Verschlußabschnitt verschließt. Die Jocheinrichtung ist somit mehrfunktional aufgebaut und übernimmt neben ihrer Rückschlußfunktion für das Magnetfeld gleichzeitig eine Verschlußfunktion in Bezug auf die Ventilkammer. Auf diese Weise kann die Bauteileanzahl des Magnetventils reduziert werden.

Vorteilhafte Weiterbildungen der Erfindung gehen aus den Unteransprüchen hervor.

Die Jocheinrichtung ist zweckmäßigerweise so ausgebildet, dass sie die Installationsöffnung mit ihrem Verschlußabschnitt deckelartig überdeckt. Der Verschlußabschnitt kann plattenartig gestaltet sein.

Zur Abdichtung der Installationsöffnung ist bevorzugt eine zwischen dem Ventilgehäuse und dem Verschlußabschnitt plazierte Dichtung vorgesehen, die die Installationsöffnung rahmenartig umschließt. Zweckmäßigerweise ist die Dichtung in eine nutartige Vertiefung des Ventilgehäuses eingelegt.

Der durch den Klappanker betätigbare Verschließkörper befindet sich zweckmäßigerweise an dem dem Verschlußabschnitt entgegengesetzten vorderen Endbereich des Klappankers. Der Ventilschließkörper kann ein fest mit dem Klappanker verbundenes oder, bevorzugt, ein gesondertes Bauteil sein.

Im Betrieb kann der Klappanker zwischen einer von einem feststehenden Anker des Elektromagneten angezogenen Schaltstellung und einer von dem feststehenden Anker weggeklappten weiteren Schaltstellung umgeschaltet werden. Zweckmäßigerweise wird der Klappanker durch eine in der Ventilkammer plazierte Federeinrichtung ständig in Richtung der weggeklappten Schaltstellung beaufschlagt. Zum Anklappen an den feststehenden Anker und somit zum Umschalten in die angezogene Schaltstellung wird die Spule bestromt.

Von Vorteil ist es, wenn der Klappanker rückseitig abgeschrägt ist, so dass er in der weggeklappten Schaltstellung mit seiner rückseitigen Stirnfläche vollflächig an dem Verschlußabschnitt anliegt. Dadurch kann das Magnetfeld verlustfrei mit hoher Dichte von der Jocheinrichtung in den Klappanker übertreten, was hohe Schaltkräfte gewährleistet.

Zweckmäßigerweise wird der Klappanker durch Federmittel an den Verschlußabschnitt angedrückt. Die Federmittel sorgen auch dafür, dass der Klappanker bei der Umschaltbewegung an einer Lagerstelle fixiert bleibt, die sich im Übergangsbereich zwischen dem Verschlußabschnitt und dem Ventilgehäuse befindet.

Bei dem Verschlußabschnitt handelt es sich zweckmäßigerweise um den Abschnitt eines bügelartigen Jochteils, das die Spule umgreift.

Für die Einspeisung der erforderlichen elektrischen Betätigungssignale ist das Magnetventil zweckmäßigerweise mit einer Leiterplatte ausgestattet, die über geeignete Anschlußkontakte verfügt. Die elektrische Verbindung zwischen der Leiterplatte und der Spule geschieht vorzugsweise dadurch, dass am Ventilgehäuse wenigstens zwei mit Abstand zueinander angeordnete, elektrisch mit der Spule verbundene Kontaktfahnen vorgesehen sind, zwischen die die Leiterplatte eingesetzt ist, wobei die Leiterplatte randseitig über- elektrische Kontaktflächen verfügt, an denen die Kontaktflächen anliegen. Auf diese Weise liegt eine einfach lösbare Steckverbindung vor, die einen problemlosen Austausch der Leiterplatte ermöglicht, wenn das Magnetventil auf eine abweichende Betriebsspannung umgerüstet werden soll.

Die Spule und die gegebenenfalls vorhandene Leiterplatte finden sich zweckmäßigerweise geschützt untergebracht in einer mit ihrer Öffnung voraus auf das Ventilgehäuse aufgesetzten Haube. Diese Haube bildet quasi ein weiteres Gehäuse, zusätzlich zum Ventilgehäuse. Es besteht die Möglichkeit, mehrere Hauben mit jeweils spezifisch zugeordneten Leiterplatten bereitzustellen, die wahlweise für den Aufbau eines Magnetventils verwendbar sind, insbesondere in Abhängigkeit von der Betriebsspannung der jeweils eingesetzten Spule.

Nachfolgend wird die Erfindung anhand der beiliegenden Zeichnung näher erläutert. In dieser zeigen:
- Figur 1: eine bevorzugte Bauform des erfindungsgemäßen Magnetventils im Längsschnitt gemäß Schnittlinie I-I aus Figur 2,
- Figur 2: ein Magnetventil aus Figur 1 im Längsschnitt gemäß Schnittlinie II-II ohne Darstellung des Anschlußkörpers,
- Figur 3: x in Einzeldarstellung das mit der Spule, der Jocheinrichtung und einer Leiterplatte ausgestattete Ventilgehäuse, wobei schematisch mehrere alternativ im Zusammenhang mit dieser Anordnung verwendbare Hauben dargestellt sind, und
- Figur 4: den in Figur 3 markierten Ausschnitt IV in einer Schnittdarstellung.

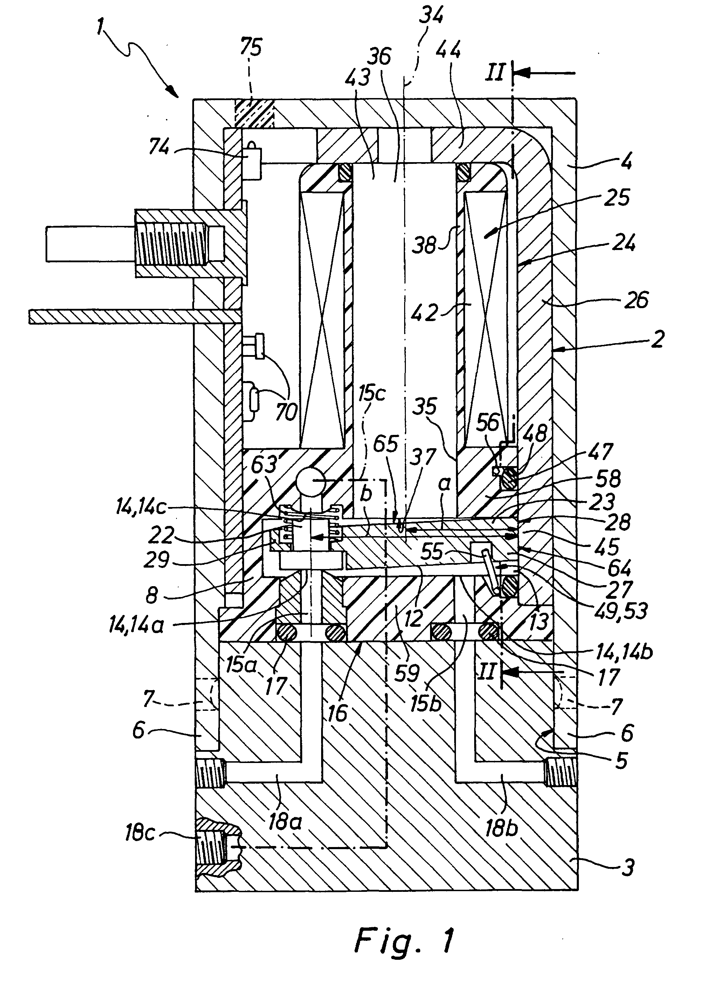

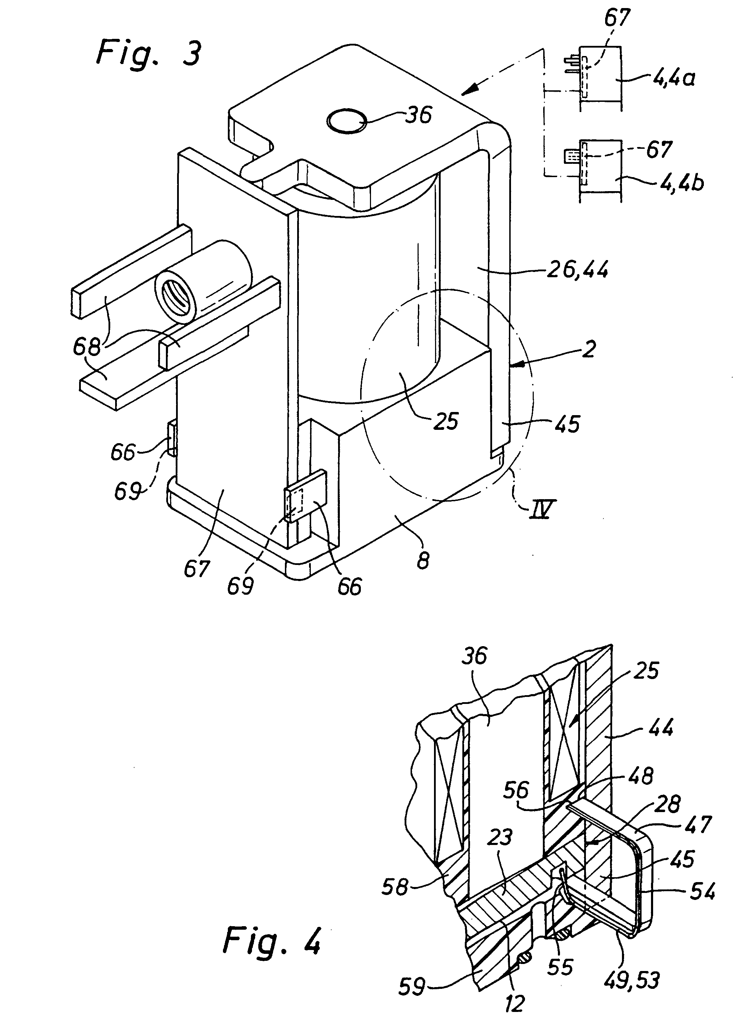

Das in Figur 1 in seiner Gesamtheit mit Bezugsziffer 1 bezeichnete Magnetventil enthält eine in Figur 3 nochmals getrennt dargestellte Ventileinheit 2, die auf einem Anschlußkörper 3 sitzt und von einer Haube 4 umschlossen ist. Die Haube 4 ist über die Ventileinheit 2 übergestülpt und mit im Bereich der Haubenöffnung 5 vorgesehenen Befestigungslaschen 6 durch Verstiften oder auf sonstige geeignete Weise am Anschlußkörper 3 befestigt. Die entsprechenden Befestigungsmittel sind bei 7 angedeutet.

Die Ventileinheit 2 enthält ein vorzugsweise aus Kunststoffmaterial bestehendes Ventilgehäuse 8. In dem Ventilgehäuse 8 ist eine flache, längliche Ventilkammer 12 ausgebildet, die vorzugsweise von einer taschenartigen Ausnehmung des Ventilgehäuses 8 gebildet ist. An einem Ende der Ventilkammer 2 befindet sich eine druckdicht verschlossene Öffnung, die im folgenden als Installationsöffnung 13 bezeichnet sei.

Bei dem Magnetventil 1 des Ausführungsbeispiels handelt es sich um ein 3/2-Wegeventil. In diesem Zusammenhang münden in die Ventilkammer 12 drei Ventilöffnungen 14, die eine Speiseöffnung 14a, eine Arbeitsöffnung 14b und eine Abführöffnung 14c bilden.

Von allen drei Ventilöffnungen 14 geht jeweils ein Fluidkanal 15a, 15b bzw. 15c ab, der an der dem Anschlußkörper 3 zugewandten Montagefläche 16 des Ventilgehäuses 8 ausmündet. Mittels zwischengeschalteter Dichtungen 17 kommuniziert jeder Fluidkanal 15a, 15b, 15c mit einem im Anschlußkörper 3 verlaufenden weiteren Fluidkanal 18a, 18b, 18c. Letztere münden zur Außenfläche des insbesondere blockförmigen Anschlußkörpers 3 aus, wobei den Mündungsbereichen Anschlußmittel zugeordnet sind, die das Anschließen von Fluidleitungen ermöglichen.

Über den mit der Speiseöffnung 14a kommunizierenden weiteren Fluidkanal 18a wird im Betrieb des Magnetventils 1 ein fluidisches Druckmedium eingespeist, insbesondere Druckluft. An den mit der Arbeitsöffnung 14b kommunizierenden weiteren Fluidkanal 18b kann ein mit Druckmedium anzusteuernder Verbraucher, beispielsweise ein fluidbetätigter Antrieb, angeschlossen werden. Über den mit der Abführöffnung 14c verbundenen weiteren Fluidkanal 18c kann vom Verbraucher zurückströmendes Druckmedium abgeführt bzw. entlüftet werden.

Die Arbeitsöffnung 14b steht in ständiger Verbindung mit der Ventilkammer 12. Die Speiseöffnung 14a und die Abführöffnung 14c liegen sich in Höhenrichtung der Ventilkammer 12 gegenüber, wobei sich zwischen ihnen ein beweglicher Ventilschließkörper 22 befindet. Je nach Schaltstellung des Magnetventils 1 wird eine der beiden vorgenannten Öffnungen vom Ventilschließkörper 22 dicht verschlossen und die jeweils andere freigegeben. Auf diese Weise kann die Arbeitsöffnung 14b über die Ventilkammer 12 hinweg wahlweise mit der Speiseöffnung 14a oder mit der Abführöffnung 14c verbunden werden.

Als Betätigungselement für den Ventilschließkörper 22 ist ein Klappanker 23 vorgesehen. Er befindet sich ebenfalls im Innern der Ventilkammer 12 und ist Bestandteil eines allgemein mit Bezugsziffer 24 bezeichneten Elektromagneten, der unter anderem auch noch eine Spule 25 und eine Jocheinrichtung 26 enthält.

Der Klappanker 23 hat längliche Gestalt und ist vorzugsweise plattenartig ausgebildet. Durch Aktivierung bzw. Deaktivierung der Spule 25 kann er zu einer Klapp- bzw. Schwenkbewegung um eine seinem rückwärtigen Endbereich 27 zugeordnete Lagerstelle 28 veranlaßt werden. Im Rahmen dieser Schwenkbewegung wird der Ventilschließkörper 22 zwischen seinen beiden Schließstellungen verlagert. Der Ventilschließkörper 22 ist am vorderen Endbereich 29 des Klappankers 23 angeordnet.

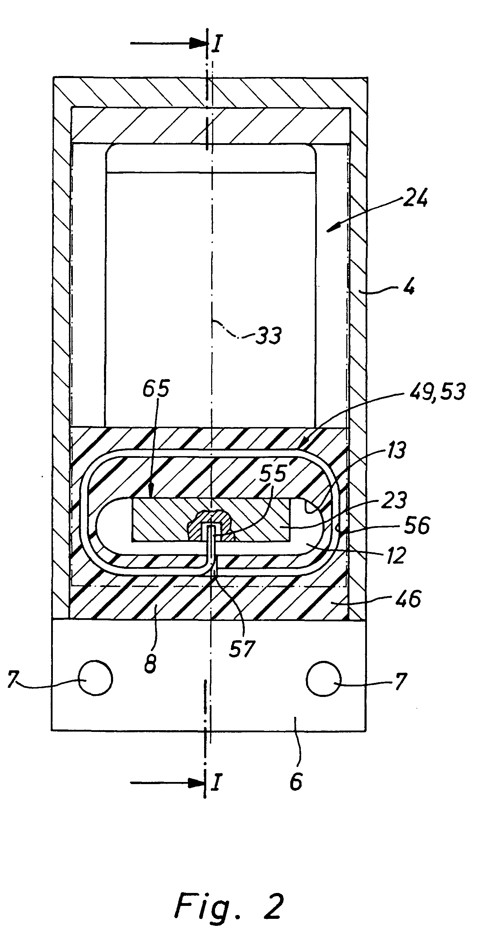

Die Klapp- bzw. Schwenkbewegung des Klappankers 23 findet in einer in Figur 2 strichpunktiert angedeuteten Schwenk- oder Klappebene 33 statt. Die Spule 25 ist außen am Ventilgehäuse 8 so plaziert, dass ihre Längsachse 34 mit der Klappebene 33 des Klappankers 23 zusammenfällt.

In der Klappebene 33 mündet längsseits neben dem Klappanker 23 eine Gehäuseöffnung 35 in die Ventilkammer 12 ein, in die ein vorzugsweise stabförmig ausgebildeter feststehender Anker 36 des Elektromagneten 24 eingesteckt ist. Dessen dem Klappanker 23 zugewandte Stirnfläche bildet eine Anzugsfläche 37 und liegt beim Ausführungsbeispiel der Oberseite des Klappankers 23 gegenüber. Bevorzugt verläuft sie bündig mit der die Gehäuseöffnung 35 umgrenzenden Wandfläche der Ventilkammer 12.

Der feststehende Anker 36 ragt über das Ventilgehäuse 8 hinaus und durchsetzt einen rohrförmigen Spulenträger 38, auf dem die Spulenwicklung 42 der Spule 25 sitzt. Der Spulenträger 38 ist zweckmäßigerweise einstückig mit dem Ventilgehäuse 8 ausgebildet.

Die für den magnetischen Rückschluß sorgende Jocheinrichtung 26 ist - beispielsweise durch Vernieten - mit dem der Anzugsfläche 37 entgegengesetzten äußeren Endbereich 43 des feststehenden Ankers 36 verbunden und erstreckt sich unter umgreifen der Spule 25 bis hin zum Ventilgehäuse 8. Die Spule 25 wird dabei von der Jocheinrichtung 26 an der dem Ventilgehäuse 8 entgegengesetzten Stirnseite sowie an einer Stelle ihres Umfanges von der Jocheinrichtung 26 flankiert. Zweckmäßigerweise besteht die Jocheinrichtung 26 hierzu aus einem bügelartigen, L-förmig gestalteten Jochteil 44.

Das Jochteil 44 überlappt das Ventilgehäuse 8 im Bereich der Installationsöffnung 13, wobei sein auf Höhe der Installationsöffnung 13 liegender Abschnitt einen Verschlußabschnitt 45 bildet, der unmittelbar das oben angesprochene dichte Verschließen der Installationsöffnung 13 bewirkt. Der Verschlußabschnitt 45 ist vorzugsweise plattenartig ausgebildet und überdeckt die Installationsöffnung 13 nach Art eines Deckels. Er liegt dabei an der die Installationsöffnung 13 umgrenzenden Außenfläche - nachfolgend als rückseitige Außenfläche 46 bezeichnet - an.

Der Verschlußabschnitt 45 ist beim Ausführungsbeispiel vom Endabschnitt des längeren Schenkels des L-förmigen Jochteils 44 gebildet. Durch die feste Verbindung des anderen, kürzen L-Schenkels mit dem äußeren Endbereich 43 des die Spule 25 durchsetzenden feststehenden Ankers 36, wird der Verschlußabschnitt 45 fest gegen die rückseitige Anschlußfläche 46 angedrückt.

Der Klappanker 23 kann bei abgenommener Jocheinrichtung 26 durch die dann offene Installationsöffnung 13 hindurch in die Ventilkammer 12 eingesetzt werden.

Damit die Ventilkammer 12 im Bereich der Installationsöffnung 13 tatsächlich fluiddicht verschlossen ist, ist beim Ausführungsbeispiel zwischen dem Ventilgehäuse 8 und dem Verschlußabschnitt 45 eine zusätzliche Dichtung 47 angeordnet. Die Dichtung 47 ist ring- oder rahmenartig ausgebildet, wobei sie die Installationsöffnung 13 umgibt. Zweckmäßigerweise sitzt sie in einer in die rückseitige Außenfläche 46 des Ventilgehäuses 8 eingebrachten nutartigen Vertiefung 48 ein.

Der Klappanker 23 stützt sich mit seinem rückwärtigen Endbereich 27 verschwenkbar an dem die Installationsöffnung 13 überdeckenden Verschlußabschnitt 45 ab. Vorzugsweise wird er durch Federmittel 49 rückseitig an den Verschlußabschnitt 45 angedrückt, insbesondere derart, dass unabhängig von der Schaltstellung des Klappankers 23 ein ständiger Berührkontakt zum Verschlußabschnitt 45 und somit zur Jocheinrichtung 26 vorliegt.

Beim Ausführungsbeispiel sind die Federmittel 49 von einem Federbügel 53 gebildet, der über einen ringförmigen Halteabschnitt 54 und einen stiftartigen Beaufschlagungsabschnitt 55 verfügt. Der ringförmige Halteabschnitt 54 ist um die Installationsöffnung 13 herum angeordnet und dort zwischen dem Ventilgehäuse 8 und dem Verschlußabschnitt 45 fixiert. Zweckmäßigerweise sitzt er in einer entlang der nutartigen Vertiefung 48 verlaufenden Haltenut 56 ein, die sich an den Grund der nutartigen Vertiefung 48 anschließt. Auf diese Weise kommt der Halteabschnitt 54 zwischen dem Ventilgehäuse 8 und der Dichtung 47 zu liegen.

Der ringförmige Halteabschnitt 54 ist an einer Stelle unterbrochen. Die Unterbrechungsstelle 57 ist etwa breitenmittig mit Bezug zu dem Flachgestalt aufweisenden, leistenförmigen Klappanker 23 plaziert. Dort schließt sich an den einen Endabschnitt des Halteabschnittes 54 ein von einem umgebogenen Endabschnitt des Federbügels 53 gebildeter, stiftartiger Beaufschlagungsabschnitt 55 an, der von der der Spule 25 entgegengesetzten Unterseite her in die Ventilkammer 12 hineinragt und von unten her an dem Klappanker 23 angreift.

Der Beaufschlagungsabschnitt 55 taucht in eine an der Unterseite des Klappankers 23 vorgesehene Vertiefung ein. Als "Unterseite" sei die von der Anzugsfläche 37 wegweisende Seite des Klappankers 23 bezeichnet.

Im entspannten Zustand liegt der Beaufschlagungsabschnitt 55 in der vom Halteabschnitt 54 aufgespannten Federebene. Im installierten Zustand ist der Beaufschlagungsabschnitt 55 aus dieser Federebene ausgebogen und verläuft schräg dazu. Daraus resultiert eine Rückstellkraft, mit der der Beaufschlagungsabschnitt 55 den Klappanker 23 ständig nach hinten gegen den Verschlußabschnitt 45 drückt.

Die oben erwähnte Lagerstelle 28 für die Klapp- oder Schwenkbewegung des Klappankers 23 befindet sich im Übergangsbereich zwischen dem Verschlußabschnitt 45 und dem sich an die Installationsöffnung 13 anschließenden Abschnitt der die Gehäuseöffnung 35 für den feststehenden Anker 36 aufweisenden oberen Wandung 58 der Ventilkammer 12. In den dadurch ausgebildeten Eckbereich wird der Klappanker 23 durch die Federmittel 49 hineingedrückt, wobei eine Kraftkomponente auch in Richtung der oberen Wandung 58 wirkt. Auf diese Weise bleibt der Klappanker 23 an der Lagerstelle 28 auch ohne Installation einer physikalischen Schwenkachse sicher fixiert.

Bei deaktivierter Spule 25 nimmt der Klappanker 23 eine von der Anzugsfläche 37 weggeklappte Schaltstellung ein. Diese weggeklappte Schaltstellung ist in den Zeichnungen ersichtlich. Der Klappanker 23 verläuft hier ausgehend von der Lagerstelle 28 schräg in Richtung der unteren Wandung 59 der Ventilkammer 12, wobei zur oberen Wandung 58 hin ein keilförmiger Zwischenraum definiert wird. In dieser weggeklappten Stellung drückt der Klappanker 23 den Ventilschließkörper 22 gegen die Speiseöffnung 14a, die somit verschlossen ist. Gleichzeitig ist der Ventilschließkörper 22 von der Abführöffnung 14c abgehoben, die somit mit der Arbeitsöffnung 14b in fluidischer Verbindung steht.

Die weggeklappte Schaltstellung wird durch eine Federanordnung 63 hervorgerufen, die sich innerhalb der Ventilkammer 12 zwischen dem Ventilgehäuse 8 und dem Klappanker 23 abstützt. Bevorzugt wirkt sie zwischen dem vorderen Endbereich 29 des Klappankers 23 und dem die Abführöffnung 14c umschließenden Bereich der oberen Wandung 58.

Wird die Spule 25 elektrisch erregt und somit aktiviert, bildet sich ein Magnetfeld aus, das den Klappanker 23 entgegen der Kraft der Federanordnung 63 verschwenkt, bis der Klappanker 23 an der Anzugsfläche 37 des feststehenden Ankers 36 anliegt. In dieser angezogenen Schaltstellung wird der beim Ausführungsbeispiel separat vom Klappanker 23 ausgebildete Ventilschließkörper 22 nicht mehr gegen die Speiseöffnung 14a angedrückt, so dass das an der Speiseöffnung 14a anstehende Druckmedium in der Lage ist, den Ventilschließkörper 22 abzuheben und gegen die Abführöffnung 14c anzudrücken. Letztere ist somit dicht verschlossen und das Druckmedium kann von der Speiseöffnung 14a zur Arbeitsöffnung 14b überströmen.

Vorzugsweise ist der Klappanker 23 rückseitig so abgeschrägt, dass er in der weggeklappten Schaltstellung mit seiner rückseitigen Stirnfläche 64 vollflächig an der Innenseite des Verschlußabschnittes 45 anliegt. Um dies zu erreichen, verläuft die rückseitige Stirnfläche 64 mit Bezug zu der der Anzugsfläche 37 zugewandten oberen Klappankerfläche 65 in einem Winkel, der geringfügig kleiner als 90° ist und etwa dem Keilwinkel entspricht, der sich in der weggeklappten Schaltstellung zwischen der oberen Klappankerfläche 65 und der Anzugsfläche 37 ausbildet.

Der Abstand "a" zwischen der Lagerstelle 28 und der Mitte der Anzugsfläche 37 bildet beim Ausführungsbeispiel den Krafthebelarm bei der Betätigung des Klappankers 23. Er ist kleiner als der dem Schließhebelarm entsprechende Abstand "b" zwischen der Lagerstelle 28 und der Mitte der sich gegenüberliegenden Speise- und Abführöffnungen 14a, 14c. Dadurch ergibt sich eine optimale Kraftübersetzung. Bevorzugt liegt das Hebelverhältnis im Bereich von 1 : 2.

Bei dem Magnetventil 1 des Ausführungsbeispiels ist eine besonders vorteilhafte Maßnahme zur elektrischen Kontaktierung der Spule 25 vorgesehen.

Die Maßnahme sieht zunächst wenigstens zwei und vorzugsweise genau zwei Kontaktfahnen 66 vor, die am Ventilgehäuse 8 fixiert sind, wobei sie an der der Installationsöffnung 13 entgegengesetzten Vorderseite über das Ventilgehäuse 8 hinausragen. Bezogen auf die Längsachse 34 liegen die beiden Kontaktfahnen auf gleicher Höhe, wobei sie sich quer dazu mit Abstand gegenüberliegen. Über nicht näher dargestellte elektrische Leiter sind sie mit der Spulenwicklung 42 elektrisch verbunden.

In den Bereich zwischen den beiden Kontaktfahnen 66 ist eine in Höhenrichtung verlaufende Leiterplatte 67 eingesetzt. Ihre Ausdehnungsebene verläuft rechtwinkelig zur Klappebene 33 des Klappankers 23. Sie flankiert sowohl das Ventilgehäuse 8 als auch die Spule 25 und den über der Spule 25 liegenden Endabschnitt der Jocheinrichtung 26.

An der Leiterplatte 67 sind elektrische Anschlußkontakte 68 vorgesehen, vorzugsweise als Steckkontakte ausgebildet, über die von außen her elektrische Betätigungssignale eingespeist werden können, die der Aktivierung oder Deaktivierung der Spule 25 dienen. Über nicht näher dargestellte Leiterbahnen der Leiterplatte 6 ergibt sich eine Verbindung von den elektrischen Anschlußkontakten 68 zu Kontaktflächen 69, die am Rand der Leiterplatte 67 im Bereich der Kontaktfahnen 66 vorgesehen sind.

Die Leiterplatte 6 ist mit einer gewissen Vorspannung zwischen die Kontaktfahnen 66 eingesetzt, die dabei auf Höhe der Kontaktflächen 69 ganz oder teilweise an der Leiterplatte vorbeigreifen und unter Vorspannung an den Kontaktflächen 69 anliegen. Auf diese Weise ist die elektrische Verbindung zwischen den Kontaktflächen 69 der Leiterplatte 67 und den ventilgehäuseseitigen Kontaktfahnen 66 hergestellt. Die Kontaktierung der Leiterplatte 67 mit den Kontaktfahnen 66 kann somit sehr leicht durch einen Steckvorgang erfolgen. Dies macht es auch sehr einfach, die Leiterplatte 67 auszutauschen, wenn eine andere Konfiguration oder Bauart von elektrischen Anschlußkontakten 68 gewünscht ist oder wenn eine Umrüstung des Magnetventils auf eine mit einer anderen Spannung betätigbare Spule 25 erfolgen soll.

Letzteres ist vor allem dann relevant, wenn die Leiterplatte 67 mit den Komponenten 70 einer Ansteuerelektronik für die Spule 25 ausgestattet ist. Entsprechend der jeweiligen Betriebsspannung kann dann eine Leiterplatte 67 mit spezifisch angepaßter Ansteuerelektronik von Fall zu Fall eingesetzt werden.

Die Leiterplatte 67 kann bei Bedarf auch mit Leuchtanzeigemitteln 74 bestückt sein, die den momentanen Schaltzustand visualisieren. Die aufgesetzte Haube 4, die sowohl die Spule 25 als auch die Leiterplatte 67 umschließt, kann dann zumindest partiell lichtdurchlässig ausgeführt sein. In Figur 1 ist ein im Bereich der Leuchtanzeigemittel 74 liegender lichtdurchlässiger Bereich der Haube 4 bei 75 angedeutet.

Da die elektrischen Anschlußkontakte 68 die Wandung der Haube 4 durchsetzen, bedarf es einer auf die elektrischen Anschlußkontakte 68 abgestimmten spezifischen Haubengestaltung. Um flexibel auf die Bedürfnisse der Anwender reagieren zu können, ist es daher von Vorteil, mehrere in Figur 3 exemplarisch bei 4a und 4b angedeutete Hauben mit jeweils spezifisch zugeordneter Leiterplatte 67 bereitzustellen, die den Bedürfnissen entsprechend alternativ installierbar sind. Auch kann auf diese Weise ein problemloser Austausch erfolgen, wenn das Magnetventil auf Grund sich ändernder Einsatzbedingungen umgerüstet werden soll.

Bei der Montage des Magnetventils wird der Klappanker 23 vor der Installation der Jocheinrichtung 26 durch die dann freiliegende Installationsöffnung 13 hindurch in die Ventilkammer 12 eingesetzt. Nachdem der Klappanker 23 fertig eingebaut ist, wird zum Verschließen der Ventilkammer 12 die Jocheinrichtung 26 angebracht. Bevor die Jocheinrichtung 26 angebracht wird, ragt der Klappanker 23 rückseitig ein Stück weit über die Installationsöffnung 13 hinaus. Der Federbügel 53 befindet sich dann noch im entspannten Grundzustand. Beim Ansetzen der Jocheinrichtung 26 wird der Klappanker 23 durch den Verschlußabschnitt 45 in die Ventilkammer 12 hinein verschoben, wobei der am Klappanker 23 angreifende Beaufschlagungsabschnitt 55 des Federbügels 53 ausgebogen wird, so dass eine den Klappanker 23 gegen die den Verschlußabschnitt 45 drückende Federkraft erzeugt wird.

## Patentansprüche

1. Magnetventil, mit einem Elektromagnet (24), der eine Spule (25) mit zugeordneter Jocheinrichtung (26) sowie einen Klappanker (23) für die Betätigung mindestens eines Ventilschließkörpers (22) aufweist, und mit einem die Spule (25) tragenden Ventilgehäuse (8), das eine den Klappanker (23) mit dem Ventilschließkörper (22) enthaltende Ventilkammer (12) aufweist, in die eine in Verlängerung des Klappankers (23) angeordnete, dicht verschlossene Installationsöffnung (13) für den Klappanker (23) führt, **dadurch gekennzeichnet, dass** die Installationsöffnung (13) unmittelbar von einem Abschnitt (45) der Jocheinrichtung (26) verschlossen ist, wobei sich der Klappanker (23) rückseitig an diesem Verschlußabschnitt (45) verschwenkbar abstützt.

2. Magnetventil nach Anspruch 1, **dadurch gekennzeichnet, dass** der Verschlußabschnitt (45) plattenartig ausgebildet ist.

3. Magnetventil nach Anspruch 1 oder 2, **dadurch gekennzeichnet, dass** der Verschlußabschnitt (45) die Installationsöffnung (13) deckelartig überdeckt.

4. Magnetventil nach einem der Ansprüche 1 bis 3, **gekennzeichnet durch** eine zwischen dem Ventilgehäuse (8) und dem Verschlußabschnitt (45) angeordnete Dichtung (47), die die Installationsöffnung (13) umgibt, wobei sie zweckmäßigerweise in einer nutartigen Vertiefung (48) des Ventilgehäuses (8) plaziert ist.

5. Magnetventil nach einem der Ansprüche 1 bis 4, **dadurch gekennzeichnet, dass** die Ventilkammer (12) von einer taschenartigen Ausnehmung des Ventilgehäuses (8) gebildet ist.

6. Magnetventil nach einem der Ansprüche 1 bis 5, **dadurch gekennzeichnet, dass** der Ventilschließkörper (22) dem vom Verschlußabschnitt (45) abgewandten vorderen Endbereich (29) des Klappankers (23) zugeordnet ist.

7. Magnetventil nach einem der Ansprüche 1 bis 6, **dadurch gekennzeichnet, dass** der Klappanker (23) zwischen einer von einem feststehenden Anker (36) des Elektromagneten (24) angezogenen Schaltstellung und einer von dem feststehenden Anker (36) weggeklappten Schaltstellung umschaltbar ist.

8. Magnetventil nach Anspruch 7, **dadurch gekennzeichnet, dass** der feststehende Anker (36) in eine längsseits neben dem Klappanker (23) in die Ventilkammer (12) einmündende Gehäuseöffnung (35) eingesteckt ist, wobei der Klappanker (23) in der angezogenen Schaltstellung an der ihm zugewandten Stirnfläche des feststehenden Ankers (36) anliegt.

9. Magnetventil nach Anspruch 7 oder 8, **gekennzeichnet durch** eine in der Ventilkammer (12) angeordnete, sich zwischen dem Ventilgehäuse (8) und dem Klappanker (23) abstützende Federanordnung (63), die den Klappanker (23) in Richtung der weggeklappten Schaltstellung beaufschlagt.

10. Magnetventil nach einem der Ansprüche 7 bis 9, **dadurch gekennzeichnet, dass** der Klappanker (23) rückseitig abgeschrägt ist, so dass er in der weggeklappten Schaltstellung mit einer rückseitigen Stirnfläche (64) vollflächig an dem Verschlußabschnitt (45) anliegt.

11. Magnetventil nach einem der Ansprüche 1 bis 10, **dadurch gekennzeichnet, dass** die Lagerstelle (28) für die Klappbewegung des Klappankers (23) im Übergangsbereich zwischen dem Verschlußabschnitt (45) und der die Installationsöffnung (13) begrenzenden Wandung (58) des Ventilgehäuses (8) vorgesehen ist.

12. Magnetventil nach einem der Ansprüche 1 bis 11, **gekennzeichnet durch** Federmittel (49), die den Klappanker (23) gegen den Verschlußabschnitt (45) drücken.

13. Magnetventil nach Anspruch 12, **dadurch gekennzeichnet, dass** die Federmittel (49) von einem Federbügel (53) gebildet sind, der einen zwischen dem Ventilgehäuse (8) und dem Verschlußabschnitt (45) der Jocheinrichtung (26) fixierten ringförmigen Halteabschnitt (54) und einen von einem Endabschnitt des Federbügels (53) gebildeten, in die Ventilkammer (12) hineinragenden Beaufschlagungsabschnitt (55) aufweist, wobei der Beaufschlagungsabschnitt (55) den Klappanker (23) mit einer Federkraft beaufschlagt.

14. Magnetventil nach einem der Ansprüche 1 bis 13, **dadurch gekennzeichnet, dass** der Verschlußabschnitt (45) von einem die Spule (25) umgreifenden bügelartigen Jochteil (44) gebildet ist, das insbesondere eine L-förmige Gestalt hat.

15. Magnetventil nach einem der Ansprüche 1 bis 14, **dadurch gekennzeichnet, dass** die Spule (25) außen derart am Ventilgehäuse (8) plaziert ist, dass ihre Längsachse (34) mit der Klappebene (33) des Klappankers (23) zusammenfällt.

16. Magnetventil nach einem der Ansprüche 1 bis 15, **dadurch gekennzeichnet, dass** von dem Ventilgehäuse (8) wenigstens zwei mit Abstand zu einander angeordnete, elektrisch mit der Spule (25) verbundene Kontaktfahnen (66) wegragen, zwischen die eine randseitig mit elektrischen Kontaktflächen (69) versehene Leiterplatte (67) so eingesetzt ist, dass die Kontaktfahnen (66) an den Kontaktflächen (69) anliegen, wobei an der Leiterplatte (67) ferner elektrische Anschlußkontakte (68) für die Einspeisung elektrischer Betätigungssignale vorgesehen sind.

17. Magnetventil nach Anspruch 16, **dadurch gekennzeichnet, dass** die Leiterplatte (67) mit den Komponenten (70) einer Ansteuerelektronik für die Spule (25) bestückt ist.

18. Magnetventil nach einem der Ansprüche 1 bis 17, **gekennzeichnet durch** eine die Spule (25) und die gegebenenfalls vorhandene Leiterplatte (67) umschließende Haube (4), die im Bereich ihrer Öffnung (5) an einem das Ventilgehäuse (8) tragenden Anschlußkörper (3) fixierbar ist.

19. Magnetventil nach Anspruch 18, **gekennzeichnet durch** mehrere alternativ installierbare Hauben (4) mit jeweils spezifisch zugeordneter Leiterplatte (67).

20. Magnetventil nach einem der Ansprüche 1 bis 19, **dadurch gekennzeichnet, dass** der Spulenträger (38) der Spule (25) einstückig mit dem Ventilgehäuse (8) ausgebildet ist.

## Claims

1. Solenoid valve, with a solenoid (24), having a coil (25) with assigned yoke device (26) together with a hinged armature (23) for the actuation of one or more valve closing elements (22), and with a valve casing (8) carrying the coil (25) and having a valve chamber (12) containing the hinged armature (23) with the valve closing element (22) and into which leads a tightly sealed installation port (13) for the hinged armature (23), provided in an extension of the hinged armature (23), **characterised in that** the installation port (13) is closed directly by a closing section (45) of the yoke device (26), with the hinged armature (23) resting pivotably at the rear of this closing section (45).

2. Solenoid valve according to claim 1, **characterised in that** the closing section (45) is plate-like in form.

3. Solenoid valve according to claim 1 or 2, **characterised in that** the closing section (45) covers the installation port (13) in the manner of a lid.

4. Solenoid valve according to any of claims 1 to 3, **characterised by** a seal (47) surrounding the installation port (13) and located between the valve casing (8) and the closing section (45), and placed expediently in a slot-like recess (48) of the valve casing (8).

5. Solenoid valve according to any of claims 1 to 4, **characterised in that** the valve chamber (12) is formed by a pocket-like recess of the valve casing (8).

6. Solenoid valve according to any of claims 1 to 5, **characterised in that** the valve closing element (22) is assigned to the front end section (29) of the hinged armature (23) which faces away from the closing section (45).

7. Solenoid valve according to any of claims 1 to 6, **characterised in that** the hinged armature (23) may be switched between a switch position attracted by a fixed armature (36) of the solenoid (24), and a switch position hinged up from the fixed armature (36).

8. Solenoid valve according to claim 7, **characterised in that** the fixed armature (36) is inserted into a casing opening (35) leading into the valve chamber (12) alongside the hinged armature (23), with the hinged armature (23) fitting up against the facing end of the fixed armature (36) in the attracted switch position.

9. Solenoid valve according to claim 7 or 8, **characterised by** a spring assembly (63), located in the valve chamber (12) and resting between the valve casing (8) and the hinged armature (23), which biases the hinged armature (23) towards the hinged-up switch position.

10. Solenoid valve according to any of claims 7 to 9, **characterised in that** the hinged armature (23) is bevelled at the rear, so that in the hinged-up switch position it makes full surface contact with the closing section (45) with its rear end face (64).

11. Solenoid valve according to any of claims 1 to 10, **characterised in that** the bearing point (28) for the pivoting movement of the hinged armature (23) is provided in the transition zone between the closing section (45) and the wall (58) of the valve casing (8) bordering the installation port (13).

12. Solenoid valve according to any of claims 1 to 11, **characterised by** spring means (49) pressing the hinged armature (23) against the closing section (45).

13. Solenoid valve according to claim 12, **characterised in that** the spring means (49) are formed by a spring bracket (53) which has an annular retaining section (54) fixed between the valve casing (8) and the closing section (45) of the yoke device (26), and a pressure-loading section (55) formed by an end section of the spring bracket (53) extending into the valve chamber (12), wherein the pressure-loading section (55) exerts a spring force on the hinged armature (23).

14. Solenoid valve according to any of claims 1 to 13, **characterised in that** the closing section (45) is formed by a bracket-like yoke element (44) encompassing the coil (25) and being in particular L-shaped.

15. Solenoid valve according to any of claims 1 to 14, **characterised in that** the coil (25) is positioned externally on the valve casing (8) in such a way that its longitudinal axis (34) coincides with the hinge plane (33) of the hinged armature (23).

16. Solenoid valve according to any of claims 1 to 15, **characterised in that** at least two contact tags (66), spaced apart and connected electrically to the coil (25), extend away from the valve casing (8), and between said contact tags a printed circuit board (67) provided with electrical contact areas (69) on the edge is so inserted that the contact tags (66) make contact with the contact areas (69), wherein the printed circuit board (67) is also provided with electrical connection contacts (68) for feeding electrical actuating signals.

17. Solenoid valve according to claim 16, **characterised in that** the printed circuit board (67) is provided with components (70) of control electronics for the coil (25).

18. Solenoid valve according to any of claims 1 to 17, **characterised by** a hood (4) surrounding the coil (25), and the printed circuit board (67) where provided, and which may be fixed in the area of its opening (5) to a connection body (3) which carries the valve casing (8).

19. Solenoid valve according to claim 18, **characterised by** several alternative hoods (4) which may be installed, each with a specifically assigned printed circuit board (67).

20. Solenoid valve according to any of claims 1 to 19, **characterised in that** the coil holder (38) of the coil (25) is made as an integral part of the valve casing (8).

## Revendications

1. Electrovanne, avec un électroaimant (24), qui comprend une bobine (25) avec un dispositif de culasse (26) associé ainsi qu'une armature mobile (23) pour l'actionnement d'au moins un corps de fermeture de soupape (22), et avec un corps de soupape (8) supportant la bobine (25), lequel corps comprend une chambre de soupape (12) contenant l'armature mobile (23) avec le corps de fermeture de soupape (22), chambre dans laquelle conduit une ouverture d'installation (13) pour l'armature mobile (23), fermée de manière étanche, disposée dans le prolongement de l'armature mobile (23), **caractérisée en ce que** l'ouverture d'installation (13) est fermée directement par un tronçon (45) du dispositif de culasse (26), l'armature mobile (23) s'appuyant de manière pivotante côté arrière sur cette section de fermeture (45).

2. Electrovanne selon la revendication 1, **caractérisée en ce que** le tronçon de fermeture (45) est conçu en forme de plaque.

3. Electrovanne selon la revendication 1 ou 2, **caractérisée en ce que** le tronçon de fermeture (45) recouvre l'ouverture d'installation (13) à la manière d'un couvercle.

4. Electrovanne selon l'une des revendications 1 à 3, **caractérisée par** un joint (47) disposé entre le corps de soupape (8) et le tronçon de fermeture (45), lequel joint entoure l'ouverture d'installation (13), en étant placé de manière avantageuse dans un creux (48) du type rainure du logement de soupape (8).

5. Electrovanne selon l'une des revendications 1 à 4, **caractérisée en ce que** la chambre de soupape (12) est formée par un évidement du type poche du corps de soupape (8).

6. Electrovanne selon l'une des revendications 1 à 5, **caractérisée en ce que** le corps de fermeture de soupape (22) est associé à la zone d'extrémité (29) avant de l'armature mobile (23) opposée au tronçon de fermeture (45).

7. Electrovanne selon l'une des revendications 1 à 6, **caractérisée en ce que** l'armature mobile (23) peut être commutée entre une position de commutation avec attraction par une armature fixe (36) de l'électroaimant (24) et une position de commutation avec repoussement par l'armature fixe (36).

8. Electrovanne selon la revendication 7, **caractérisée en ce que** l'armature fixe (36) est enfichée dans une ouverture (35) du corps débouchant longitudinalement à côté de l'armature mobile (23) dans la chambre de soupape (12), l'armature mobile (23) reposant dans la position de commutation attirée contre la surface frontale de l'armature fixe (36) tournée vers celle-ci.

9. Electrovanne selon la revendication 7 ou 8, **caractérisée par** un agencement de ressort (63) disposé dans la chambre de soupape (12), s'appuyant entre le corps de soupape (8) et l'armature mobile (23), lequel agencement sollicite l'armature mobile (23) en direction de la position de commutation repoussée.

10. Electrovanne selon l'une des revendications 7 à 9, **caractérisée en ce que** l'armature mobile (23) est inclinée côté arrière, de sorte qu'elle repose sur toute la surface de la section de fermeture (45) dans la position de commutation basculée avec une surface frontale (64) côté arrière.

11. Electrovanne selon l'une des revendications 1 à 10, **caractérisée en ce que** le point d'appui (28) pour le basculement de l'armature mobile (23) est prévu dans la zone de transition entre le tronçon de fermeture (45) et la paroi (58) du logement de soupape (8) délimitant l'ouverture d'installation (13).

12. Electrovanne selon l'une des revendications 1 à 11, **caractérisée par** des moyens formant ressort (49), qui pressent l'armature mobile (23) contre la section de fermeture (45).

13. Electrovanne selon la revendication 12, **caractérisée en ce que** les moyens formant ressort (49) sont formés par un étrier à ressort (53), qui comprend un tronçon de retenue (54) annulaire fixé entre le corps de soupape (8) et le tronçon de fermeture (45) du dispositif de culasse (26) et un tronçon de sollicitation (55) dépassant dans la chambre de soupape (12), formé par un tronçon d'extrémité de l'étrier à ressort (53), le tronçon de sollicitation (55) sollicitant l'armature mobile (23) avec une force de ressort.

14. Electrovanne selon l'une des revendications 1 à 13, **caractérisée en ce que** le tronçon de fermeture (45) est formé par une partie de culasse (44) en forme d'étrier enveloppant la bobine (25), laquelle partie présente en particulier une configuration en L.

15. Electrovanne selon l'une des revendications 1 à 14, **caractérisée en ce que** la bobine (25) est placée à l'extérieur sur le corps de soupape (8), de telle sorte que son axe longitudinal (34) coïncide avec le plan de basculement (33) de l'armature mobile (23).

16. Electrovanne selon l'une des revendications 1 à 15, **caractérisée en ce qu'**au moins deux languettes de contact (66) reliées électriquement à la bobine (25), disposées à distance l'une de l'autre, dépassent du corps de soupape (8), languettes entre lesquelles est insérée une carte de circuits imprimés (67) pourvue, côté latéral, de surfaces de contact électriques (69), de telle sorte que les languettes de contact (66) reposent contre les surfaces de contact (69), des contacts de raccordement électriques (68) pour l'alimentation des signaux d'actionnement électriques étant prévus en outre sur la carte de circuits imprimés (67).

17. Electrovanne selon la revendication 16, **caractérisée en ce que** la carte de circuits imprimés (67) est équipée des composants (70) d'une commande électronique pour la bobine (25).

18. Electrovanne selon l'une des revendications 1 à 17, **caractérisée par** une coquille (4) entourant la bobine (25) et la carte de circuits imprimés (67) éventuellement présente, laquelle coquille peut être fixée dans la zone de son ouverture (5) sur un corps de raccordement (3) supportant le logement de soupape (8).

19. Electrovanne selon la revendication 18, **caractérisée par** plusieurs coquilles (4) pouvant être installées en alternance comprenant respectivement une carte de circuits imprimés (67) spécifiquement associée.

20. Electrovanne selon l'une des revendications 1 à 19, **caractérisée en ce que** le support de bobine (38) de la bobine (25) est conçu en étant solidaire du corps de soupape (8).
